# EUROPEAN PATENT APPLICATION

(11) **EP 3 760 481 A1**
(43) Date of publication of application: **06.01.2021**
(21) Application number: 20184296.0
(22) Date of filing: 06.07.2020
(51) Int. Cl.: B60P 1/64, B63B 27/14

(54) **SELF LOADING AND UNLOADING TRANSPORT VEHICLE AND METHOD THERE FOR**

(30) Priority: 04.07.2019 NL 2023434; 20.02.2020 NL 2024954
(71) Applicant: U-Sea Beheer B.V., 9206 AX Drachten (NL)
(72) Inventor: Hessels, Hendrik, 9206 AX Drachten (NL)
(74) Representative: Arnold & Siedsma

(57) **Abstract**

The present invention relates to a self loading and unloading (gangway) transport vehicle for transporting load over a gangway, for example a gangway between a ship and an offshore structure. The present invention further relates to a method for using the gangway transport vehicle. The gangway transport vehicle comprises:
- a frame provided with moving elements;
- a carrier configured for receiving a load;
- a controller configured for moving the vehicle with the moving elements; and
- a lifting mechanism that is operatively connected to the carrier, and wherein the lifting mechanism is configured for tilting and/or lifting the carrier relative to the frame.

In a preferred embodiment the vehicle further comprises:
- an engagement member that is operatively connected to the carrier and is configured to engage the load such that the load can be picked up and placed on the carrier.

## Description

The present invention relates to a self loading and unloading transport vehicle for transporting load over a gangway, for example a gangway between a ship and an offshore structure.

During construction and maintenance of offshore structures, such as wind turbines, load has to be transferred between vessels and the offshore structures. One possibility to do this is by a crane. The downside of using a crane to transport load is that during bad weather, such as storms or heavy winds, it is not safe enough to use a crane and therefore construction is put on hold. This is costly, as the costs of using the ship are still there. Furthermore, a crane operation is relatively slow and requires a skilled operator. In addition, offshore crane operations are generally dangerous due to the swinging loads that would require expensive and complex functionality to minimize risks.

Another possibility to transport load between a vessel and an offshore structure is to use a vehicle. Onto this vehicle load is loaded, and then transported over a gangway between the vessel and the offshore structure. The downsides of these vehicles are that they are generally heavy and are not suitable for transporting over difficult terrain like bumps and/or slits in the gangway. Furthermore, the use of these vehicles by workers is dangerous as the vehicle and/or load could injure the workers, for example when a gust of wind and/or wave suddenly moves the vehicle and/or load.

It is an object of the present invention to obviate or at least reduce the abovementioned problems. It is especially an object of the present invention to provide a self loading and unloading transport vehicle which can effectively and securely transport load between a vessel and an offshore structure.

For this invention self loading and unloading transport vehicle and gangway transport vehicle are to be understood as the same concept, and can be used interchangeably.

The object of the present invention is achieved by a gangway transport vehicle, wherein the gangway transport vehicle comprises:
- a frame provided with moving elements;
- a carrier configured for receiving a load;
- a controller configured for moving the vehicle with the moving elements; and
- a lifting mechanism that is operatively connected to the carrier, and wherein the lifting mechanism is configured for tilting and/or lifting the carrier relative to the frame.

The frame has a carrier wherein the carrier is suitable for carrying a load. The carrier enables the gangway transport vehicle to handle also heavy loads, preferably loads heavier than people can carry. By providing a frame with moving elements the gangway transport vehicle can be transported over the gangway. These moving members could for example be wheels, rollers, and/or a belt.

According to the invention the gangway transport vehicle comprises a lifting mechanism that is operatively connected to the carrier. A lifting mechanism is provided to lift the load from the floor.

For this invention load, goods and cargo are to be understood as the same concept, and can be used interchangeably.

In one of the presently preferred embodiments the gangway transport vehicle further comprises an engagement member that is operatively connected to the carrier and is configured to engage the load such that the load can be picked up and placed on the carrier.

The carrier according to this preferred embodiment of invention is tiltable about a rotation axis such that the load can be picked up and/or put down. This makes the pick up and/or put down of the load easier, as not the whole weight of the load has to be lifted. Alternatively or additionally, less work has to be done by the motor, thereby enabling a smaller motor to be used by the gangway transport vehicle according to the invention. This has as its advantage that the manufacturing of the vehicle is less expensive.

The lifting mechanism configured for tilting about the rotation axis enables the carrier to tilt back, thus reducing the force necessary to move the load on the carrier. Alternatively or additionally, it also provides a safer movement during the pick up process of the load.

By providing an engagement member that is operatively connected to the carrier the gangway transport vehicle can grip the load. The engagement member can be secured to the load, whereafter the load can be pulled by for example a winch connected to the engagement member onto the carrier. This has the advantage that the gangway transport vehicle enables safe pulling of the load.

During putting down the load the gangway transport vehicle provides the same or similar effects and advantages as for picking up.

In presently preferred embodiments, the lifting mechanism comprises a cylinder, a spring element and/or a winch. In one embodiment, the rotation axis comprises a shaft to enable an effective rotational movement of the carrier. In another embodiment the lifting mechanism comprises an air spring / pneumatic cylinder system.

In a further embodiment according to the invention the engagement member comprises a hook and/or pin.

By providing the engagement member as a hook and/or pin the load can be easily connected to the gangway transport vehicle. Preferably, the load comprises a pin on which the hook can be easily connected. This renders the handling of load with the gangway transport vehicle according to the present invention relatively simple and safe.

In a further embodiment according to the invention the hook and/or pin of the load are shaped such that, when connected, provide a secure connection when the load is placed on the carrier.

The hook is preferably shaped such that when the load is positioned on the ground surface and the carrier is at an angle to the frame, the hook can be easily connected to for example a pin of the load. When the load is pulled on the carrier, and thus is substantially parallel to the carrier, the hook provides, as result of the rotational movement of the hook relative to the pin, a secure connection to the pin. The secure connection preferably comprises a brace pressing against the load in substantially the direction of the regress of the hook. This prevents the load from disconnecting from the hook while the load is transported over the gangway by the gangway transport vehicle, thereby providing a safer transportation of the load.

In a further embodiment according to the invention the gangway transport vehicle further comprises a winch that is attached to the engagement member.

The winch attached to the engagement member provides a means for pulling the engagement member, and thus the load, onto the carrier. The winch preferably comprises two cables both spooled onto the drum. The advantage of this is that the winch can always keep the cables attached to the engagement member under tension, thereby providing additional stability to the gangway transport vehicle as a whole, and further improving the safety of working with the gangway transport vehicle according to the invention.

Preferably, the gangway transport vehicle is provided with a semi-autonomous or an autonomous drive system. Such (semi-)autonomous drive system enables the vehicle to maneuver in a self-controlled manner. This also contributes to the overall safety. In addition, it may reduce the transfer time for a load. This improves the efficiency of the transfer operation. In a presently preferred embodiment the speed of the self-controlled vehicle is controlled by an operator using a remote speed control that may remotely control the vehicle speed, while the vehicle determines the direction. According to such embodiment the drive system enables automatic steering via the gangway in combination with manual (remote) speed control.

It will be understood that the autonomous drive system can be implemented in many ways. For example, the controller and/or drive system may rely on a so-called lane tracking system that enables the vehicle to autonomously move along the lane.

In a further embodiment according to the invention the carrier further comprises a guide configured for guiding the engagement member, such as a hook.

The guide guides the engagement member, such as a hook, such that the engagement member/hook moves substantially parallel to the carrier when picking up the load. This provides that the pulling force on the load is substantially parallel to the carrier, thus making the pick up of the load easier, especially in combination with the winch being substantially parallel to the carrier. The advantage of this is that it provides an even safer pick up and/or put down, also in case of a cable snap.

In a further embodiment according to the invention the moving elements comprises a continuous track.

The continuous track preferably comprises a rubber belt driven by at least one from a plurality of wheels. The at least one wheels are driven by an external or internal motor, preferably an electromotor provided with energy by a battery. The gangway transport vehicle preferably comprises two continuous tracks positioned parallel at both sides of the vehicle. An advantage of using a continuous track is that the gateway transportation vehicle will not be hindered by any slits or holes in the ground surface, such as a gateway, as the contact surface is much bigger than a vehicle with wheels. A further advantage of a continuous track is that the vehicle acquires a good maneuverability, as it can rotate on the spot.

In a further embodiment according to the invention the continuous track is attached to the frame at a substantially spherical orientation relative to a ground surface.

The continuous track comprises a belt around wheels. In a presently preferred embodiment, the wheels comprise two end wheels positioned near both ends of the continuous track and inner wheels positioned between the end wheels. By providing that the end wheels of the continuous track are at a height relative to the ground surface, and having their contact point with the ground above the contact point with the ground of at least some of the inner wheels, the continuous track achieves its spherical orientation. Preferably, the spherical orientation of the continuous track has a convex orientation relative to the ground surface. By providing a substantially spherical orientation of the continuous track relative to the ground surface, the contact surface of the continuous track with the ground surface is reduced. This has as its advantage that the friction during turning of the gangway transport vehicle is greatly reduced, thereby providing a more flexible and easy to control gangway transport vehicle. Additionally, the turning of the vehicle may require less power.

In a further embodiment according to the invention the continuous track is provided with a tipping point at or adjacent to at least one of the ends as seen in the transport direction of the vehicle.

Preferably, the end wheels are provided at a height relative to the ground surface. In case the end wheels are at a height relative to the floor, the gangway transport vehicle is in a moving mode. In the moving mode the continuous track is provided with a tipping point of the belt at or adjacent to at least one of the ends. Experiments have shown that when the length of the belt under the inner wheels is substantially the same as the length of the belt between the end wheels and the outer inner wheels, the vehicle acquires an advantageous trade-off between the ability to maneuver and the stability of the vehicle.

In a further embodiment according to the invention the vehicle is provided with a plurality of tipping points.

Preferably a second tipping point it provided by the continuous track near the outer wheel provided at a height relative to the ground. Preferably, a third tipping point is provided by the carrier. Depending on the weight of the load, going from a light to heavy load, the gangway transport vehicle will be supported by the respectively the first tipping point, the second tipping point and the third tipping point. This has as its advantage that in any situation the gangway transport vehicle is able to pull the load on the carrier in a stable way.

In an alternative embodiment of the invention a flat orientation of the continuous track can be achieved by putting the end wheels at the ground floor. Thereby the gangway transport vehicle can be switched from a pick up mode, wherein the end wheels are at the ground surface and the continuous track has a flat orientation, and the moving mode, wherein the end wheels are at a height relative to the ground surface and the continuous track has a lower contact surface with the ground. The advantage of having a flat orientation during pick up and/or put down of the load is that the surface area of the continuous track is larger, thereby increasing the stability of the gangway transport vehicle during pick up and/or put down of the load. Alternatively or additionally, a flat orientation prevents the gangway transport vehicle from undesired tilting during pick up and/or put down.

In a further embodiment according to the invention the carrier is configured to maintain the center of gravity substantially at the same longitudinal direction in presence or absence of a load.

The carrier being configured to maintain the center of gravity at or about the same location relative to the ground surface, in presence or absence of a load, achieves that the control of the gangway transport vehicle both with and without a load is optimized. The center of gravity being at the same location is even more so an advantage when the continuous track has a spherical orientation relative to a ground surface, as it must maintain a center of gravity in substantially the middle of the vehicle for it to be stable.

In a further embodiment according to the invention the center of gravity of the load during tilting is substantially above the rotation axis.

By providing a lifting system wherein the load is first pulled onto the carrier such that the center of gravity of the load is substantially above the rotation axis, an even more efficient gangway transport vehicle is achieved. This way, only half of the weight of the load has to overcome the height between the ground level and the carrier. When the center of gravity of the load is above the rotation axis, the carrier can be tilted about the rotation axis such that the carrier is parallel to the frame of the vehicle. This achieves the most efficient rotation of the load, thereby reducing the amount of work, because the center of gravity is substantially above the rotation axis and thus no, or minimal, torque is created/required as the length of the arm is substantially zero. This enables an effective and efficient rotational movement at minimal energy requirements. In addition, the control of the movement is improved. This reduces the risks of loads falling from the carrier during a rotational movement, for example.

In one of the presently preferred embodiments of the invention the lifting mechanism of the gangway transport vehicle comprises a height adjuster to raise the carrier and lift the load. Preferably, the vehicle is maneuvered (partly) under the load such that the lifting mechanism is capable of lifting the load from the floor, with or without the carrier surface. It will be understood that the lifting mechanism can be provided with different designs.

In a presently preferred design to minimize weight and/or constructional complexity, the height adjuster comprises a bellows. In this embodiment the vehicle is positioned below the load and the bellows is activated. Activation starts lifting the carrier with the load, such that the load is lifted from the floor and can be transported by the vehicle. After arriving at the desired location the bellows is de-activated such that the load is lowered and put on the floor. Then, the vehicle is moved to another location.

In a further embodiment according to the invention the gangway transport vehicle further comprises a remote controller.

The remote controller can be connected to the gangway transport vehicle via WiFi, Bluetooth, radio signals or any other suitable wireless connection, or may use cables. In one embodiment, the remote controller is embodied as an app, for example on a mobile phone. The remote controller is able to control for example the speed and of the moving elements and the direction of the vehicle, such that the load can be remotely transported between a vessel and an offshore structure. The advantage of (wireless) remotely controlling the gangway transport vehicle is that workers can safely transport the load with the vehicle while standing on a vessel or on an offshore structure, thus not having to walk over the gangway during transportation, which can be dangerous during bad weather.

In one embodiment, the vehicle further comprises a connection element for connecting a remote controller via a cable to the vehicle. This provides the ability to control the vehicle, even in case the remote controller connected to the vehicle by a wireless connection is broken and/or lost.

The invention further relates to an assembly of a gangway transport vehicle according to any of the above described embodiments and one or more loads that are configured to be transported by the gangway transport vehicle.

The loads that are configured to be transported by the gangway transport vehicle preferably comprise a pin positioned near the bottom surface of the load, such that the pin can be connected to an engagement member of the gangway transport vehicle. The assembly further has the same effects and advantages as described for the gangway transport vehicle.

The invention further relates to a ship with a gangway transport vehicle according to any of the above described embodiments.

The ship has the same effects and advantages as described for the gangway transport vehicle. In particular, the gangway transport vehicle increases the window of operation for the ship for transferring goods from and/or to the ship.

The invention further relates to a method for transporting a load, wherein the method comprises the steps of:
- providing a gangway transport vehicle according to an embodiment of the present invention;
- picking up a load;
- transporting the load; and
- putting down the load.

The method has the same effects and advantages as described for the gangway transport vehicle.

Alternatively or additionally, by providing a lifting mechanism configured to tilt the carrier about a rotation axis, the load can be easily picked up and/or put down. During pick up the carrier makes an angle with the frame. The load is then pulled up the carrier. When the load is not yet fully pulled onto the carrier, the carrier tilts about a rotation axis to a position where it is substantially parallel to the frame. Afterwards the load can be pulled up entirely to the carrier. This makes an effective way of lifting the load onto the gangway transport vehicle.

Advantages, features and details of the invention are elucidated on the basis of preferred embodiments thereof, wherein reference is made to the accompanying drawings, in which:
- Figure 1 shows a perspective view of an embodiment of a gangway transport vehicle according to the invention together with a load;
- Figure 2A-F show different stages of a gangway transport vehicle according to the invention during pick up of a load;
- Figure 3 shows a view of a working environment of a gangway transport vehicle according to the invention comprising a vessel, a gangway and an offshore structure;
- Figure 4A-E shows an alternative embodiment of a gangway transport vehicle; and
- Figure 5A-D shows a further alternative embodiment of a gangway transport vehicle.

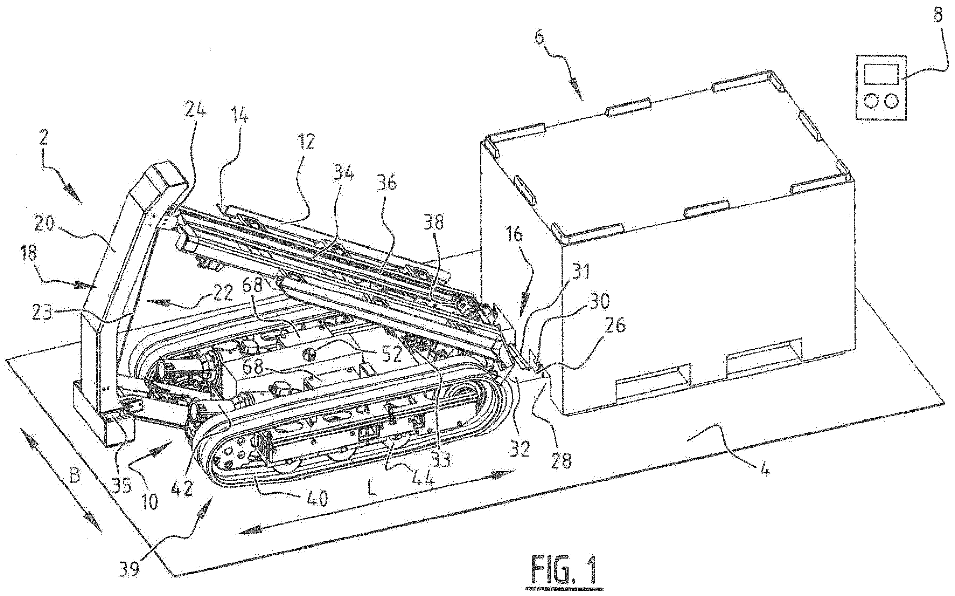

Gangway transport vehicle 2 (figure 1) is moveable over ground surface 4 for picking up load 6 that is preferably provided with pin 30 and recess 28. In the illustrated embodiment gangway transport vehicle 2 can be controlled by remote control 8. Gangway transport vehicle 2 comprises frame 10 provided with moving elements, herein embodied as continuous track 39 comprising rubber belt 40 and wheels 44. Continuous track 39 is driven by motor 42, which is provided with power by battery pack 68. Gangway transport vehicle 2 further comprises hook 26 connected to lifting arm 32. Further connected to lifting arm 32 is brace 31 for providing a secure connection with load 6. Cable 36 is connected to hook 26 and lifting arm 32 at a first end, is placed over roll 24, and operatively connected to hook winch 33 at a second end. Connected to frame 10 is carrier 12, wherein carrier 12 is rotatable relative to frame 10 about rotation axis 16. Lifting mechanism 22 comprises lifting cable 23 connected to lifting winch 35. In the illustrated embodiment rotation axis 16 comprises a shaft. Carrier 12 comprises profile plate 14 for guiding load 6 over carrier 12. Hook guide 34 guides hook 26 over carrier 12 during pick up of load 6. Gangway transport vehicle 2 further comprises lift 18 provided with arm 20, which can guide carrier 12 during tilting about rotation axis 16 during pick up and/or put down of load 6. When for example an air spring system would be used as lifting mechanism 22, lift 18 could be removed from vehicle 2. This provides an alternative embodiment of the invention. Further shown in figure 1 is center of gravity 52 of gangway transport vehicle 2. Further shown in figure 1 is length L and width B of vehicle 2.

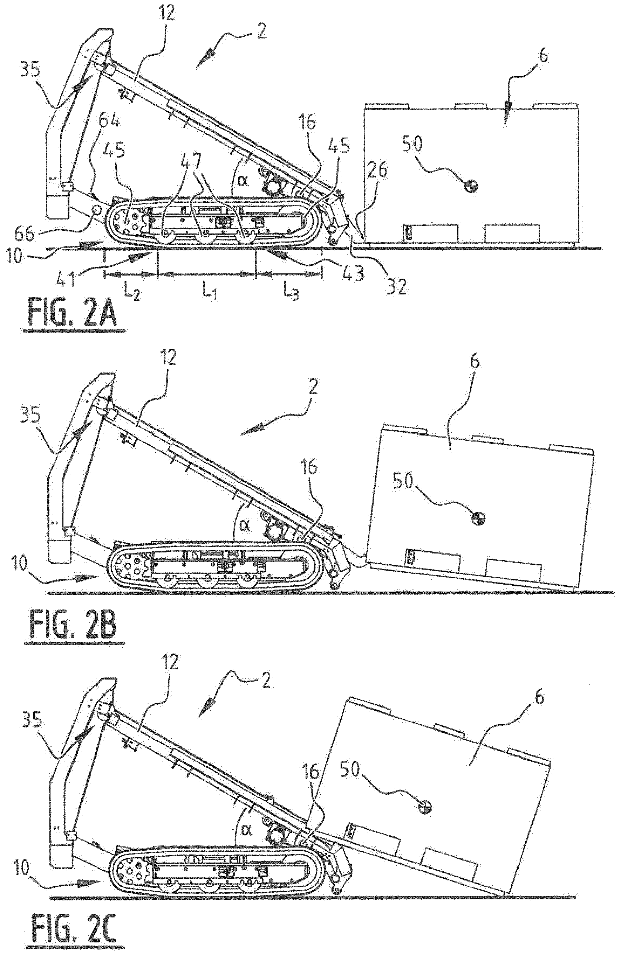

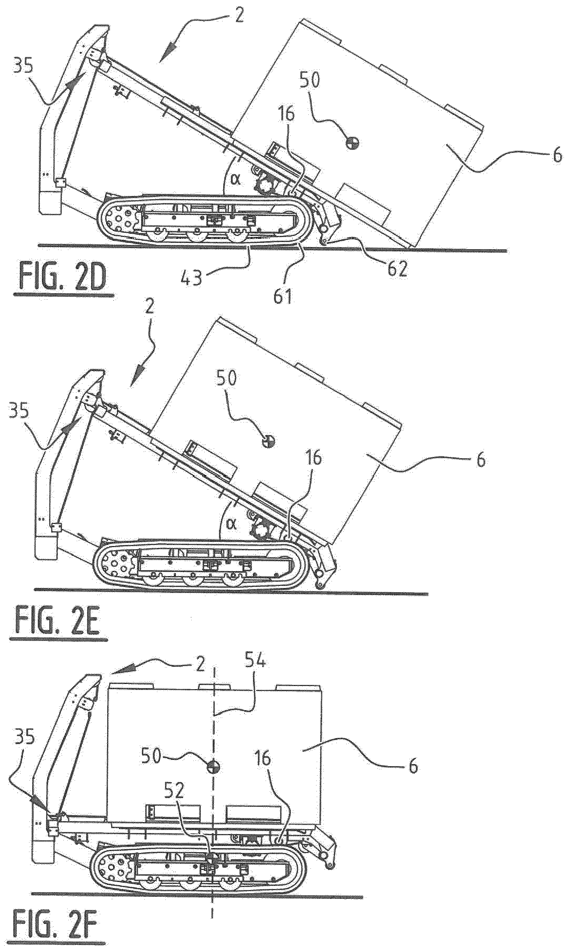

Gangway transport vehicle 2 (figure 2A-F) during pick up has carrier 12 at angle α relative to frame 10. First hook 26 is connected to load 6 (figure 2A). Further shown in figure 2A are first tipping points 41, 43. Length L₁ belt under inner wheels 47 is substantially the same as length L₂ and length L₃ combined, wherein length L₂ and L₃ are from tipping points 41, 43 to second tipping points 61. Vehicle 2 further comprises charging plug 64 for charging battery pack 68 and connection element 66 for connecting remote control 8 via a cable with vehicle 2. Then lifting arm 32 lifts load 6 such that pin 30 rests on carrier 10 (figure 2B-C). Cable 36 then gets pulled by hook winch 33, thereby pulling load 6 further on carrier 12 (figure 2D). If load 6 is light, first tipping point 43 is the point whereon vehicle 2 stabilizes during pick up. If load 6 is heavier, second tipping point 61 is the point whereon vehicle 2 stabilizes during pick up. If load 6 is really heavy, then vehicle 2 rests on reserve tipping point 62. Carrier 12 can be tilted by lifting mechanism 22 such that is parallel to frame 10. Then load 6 can be pulled up further on carrier 12 such that gangway transport vehicle 2 can transport load 6. Center of gravity 52 of an empty gangway transport vehicle 2 without load 6 is below center of gravity 50 of load 6, preferably substantially at some vertical axis 54.

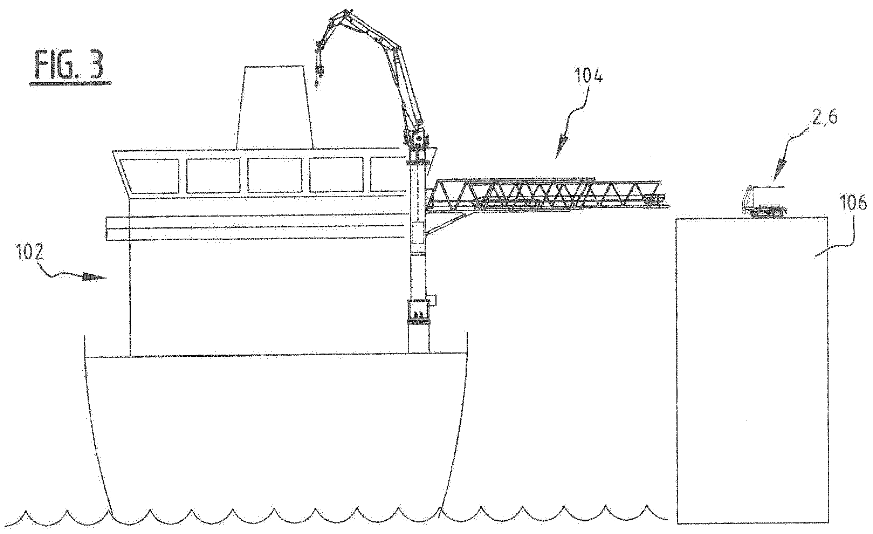

Vessel 102 (figure 3) is provided with gangway 104. Gangway 104 provides a passage from vessel 102 to offshore structure 106. Positioned on offshore structure 106 is gangway transport vehicle 6 which carries load 6. Gangway transport vehicle 2 can transport load 6 over gangway 104 from offshore structure 106 to vessel 102.

In an embodiment according to the invention gangway transport vehicle 2 is used to transport load 6 over gangway 104 from offshore structure 106 to ship 102. Hook 26 of gangway transport vehicle 2 grabs pin 30 of load 6 such that lift arm 32 can lift load 6 partly on carrier 12, wherein carrier 12 has an angle relative to frame 10. Cable 36 then pulls load 6 on carrier 12 by hook winch 33. Then carrier 12 is tilted about rotation axis 16 by such that carrier 12 rests substantially parallel on frame 10. Gangway transport vehicle 2 is then remotely controlled by remote controller 8 to transport load 6 over gangway 104, by moving wheels 44 of continuous track 39, driven by motor 42. After gangway transport vehicle 2 has reached vessel 102, load 6 can be unloaded on vessel 102. This can be done by using lifting mechanism 22 to tilt carrier 12 about rotation axis 16 at an angle relative to frame 10. Then hook winch 35 can be used to let cable 36 lower load 6 onto ground surface 4.

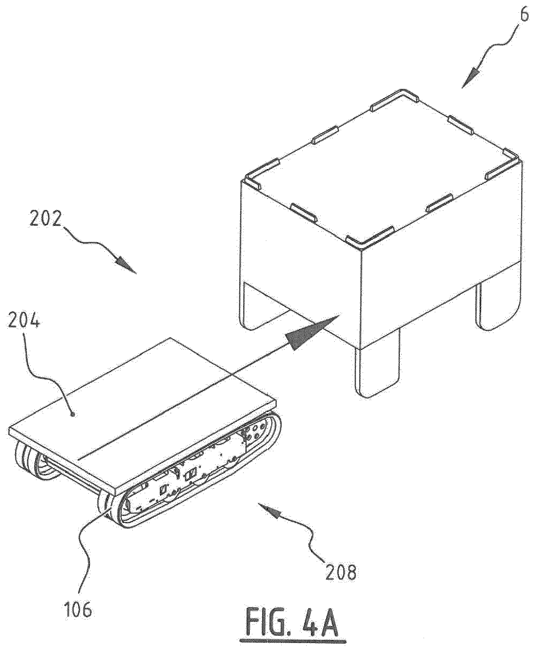

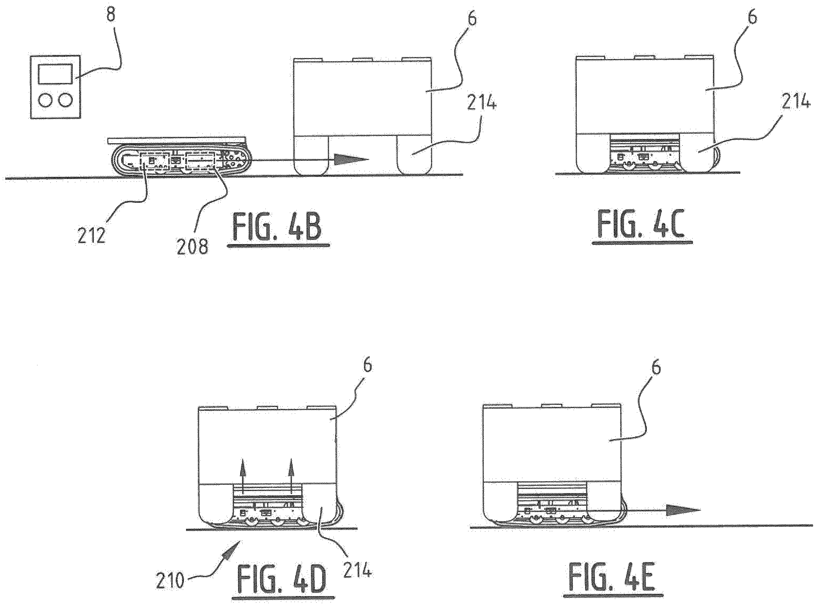

An alternative gangway transport vehicle 202 (figure 4A) comprises carrier platform 204 and belt 206 for moving. Drive 208 is responsible for moving vehicle 202. Bellows 210 is provided below carrier platform 204. Lifting drive 212 is operatively connected to bellows 210 and is configured for lifting and lowering carrier platform 204. Vehicle 202 (figure 4B) approaches load 6. In the illustrated embodiment controller 8 steers drive 208. Vehicle 202 is moved between feet 214 of load 6 (figure 4C). After positioning lifting drive 212 activates bellows 210 such that carrier platform 204 engages the bottom of load 6 and lifts load 6 (figure 4D). After lifting load 6 it can be transported to the desired location (figure 4E), such as passing over gangway 104 from vessel 102 to offshore structure 106 (figure 3).

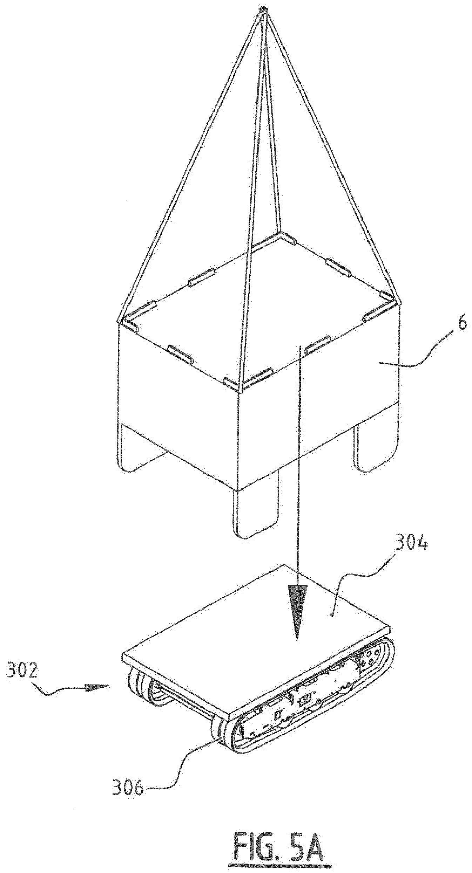

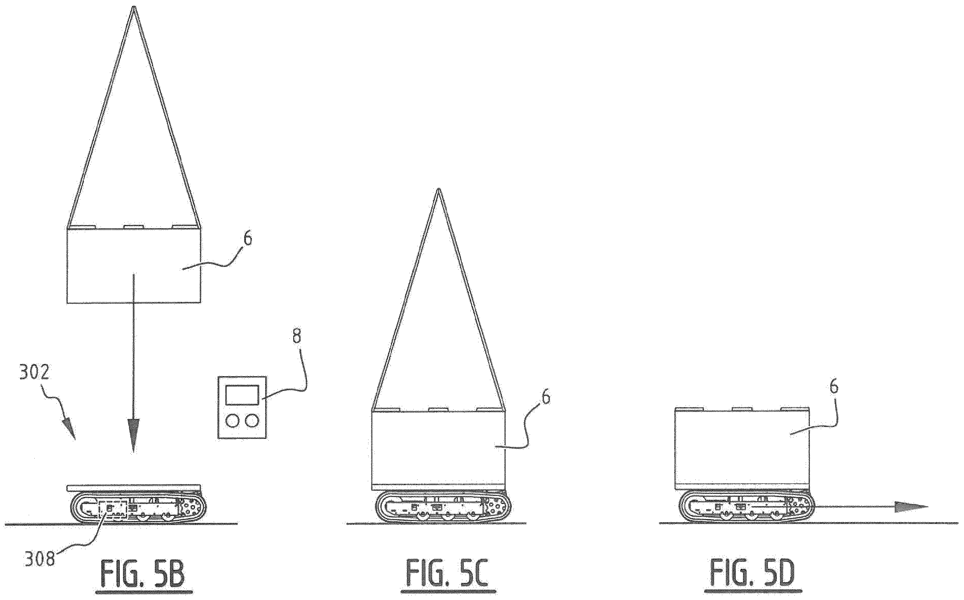

An alternative gangway transport vehicle 302 (figure 5A) comprises carrier platform 304 and belt 306 for moving. Drive 308 moves vehicle 302. In the illustrated embodiment controller 8 steers drive 308. External lifting means 310 positions load 6 on carrier platform 304. Vehicle 302 is maneuvered in a receiving position (figure 5B). External lifting means 310 (figure 5C) lower load 6 onto carrier platform 304 and vehicle 302 with load 6 is moved to the desired location (figure 5D), such as passing over gangway 104 from vessel 102 to offshore structure 106 (figure 3). At the desired location lifting means 310 or another lift removes load 6 from carrier platform 304.

The present invention is by no means limited to the above described preferred embodiments thereof. The rights sought are defined by the following claims within the scope of which many modifications can be envisaged.

## Claims

1. Gangway transport vehicle comprising:
- a frame provided with moving elements;
- a carrier configured for receiving a load;
- a controller configured for moving the vehicle with the moving elements; and
- a lifting mechanism that is operatively connected to the carrier, and wherein the lifting mechanism is configured for tilting and/or lifting the carrier relative to the frame.

2. Gangway transport vehicle according to claim 1, wherein the lifting mechanism is configured to tilt the carrier about a rotation axis such that the load can be picked up and/or put down; and further comprises an engagement member that is operatively connected to the carrier and is configured to engage the load such that the load can be picked up and placed on the carrier.

3. Gangway transport vehicle according to claim 2, wherein the engagement member comprises a hook and/or pin, and wherein the hook and/or pin of the load are preferably shaped such that, when connected, provide a secure connection when the load is placed on the carrier and/or further comprising a winch that is attached to the engagement member.

4. Gangway transport vehicle according to claim 1,2 or 3, wherein the gangway transport vehicle further comprises semi-autonomous or an autonomous drive system, preferably comprising a remote speed control.

5. Gangway transport vehicle according to any one of the foregoing claims, wherein the carrier further comprises a guide configured for guiding the engagement member.

6. Gangway transport vehicle according to any one of the foregoing claims, wherein the moving elements comprises a continuous track,

7. Gangway transport vehicle according to claim 6, wherein the continuous track is attached to the frame at a spherical orientation relative to a ground surface.

8. Gangway transport vehicle according to claim 6 or 7, wherein the continuous track is provided with a tipping point at or adjacent to at least one of ends as seen in a transport direction of the vehicle.

9. Gangway transport vehicle according to claim 6, 7 or 8, wherein the continuous track has a flat orientation relative to the ground surface during pick and/or put down of the load.

10. Gangway transport vehicle according to any one of the foregoing claims, wherein the carrier is configured to maintain the center of gravity substantially at the same location in presence or absence of the load.

11. Gangway transport vehicle according to any one of the foregoing claims, wherein the center of gravity of the load during tilting with the engagement member according to any of claims 2-10, when dependent on claim 2, is substantially above the rotation axis.

12. Gangway transport vehicle according to any one of the foregoing claims, wherein the lifting mechanism comprises a height adjuster to raise the carrier and lift the load, wherein the height adjuster preferably comprises a bellows.

13. Assembly of a gangway transport vehicle according to any of the foregoing claims and one or more loads that are configured to be transported by the gangway transport vehicle.

14. Ship provided with a gangway transport vehicle according to any one of the claims 1-12.

15. Method for transporting a load, the method comprising the steps of:
- providing a gangway transport vehicle according to any one of the foregoing claims 1-12;
- picking up a load;
- transporting the load; and
- putting down the load.
